# EUROPÄISCHE PATENTSCHRIFT

(11) **EP 4 051 490 B1**
(45) Veröffentlichungstag und Bekanntmachung des Hinweises auf die Patenterteilung: **11.10.2023**
(21) Anmeldenummer: 20800574.4
(22) Anmeldetag: 26.10.2020
(51) Int. Cl.: B29C 70/30, B29C 53/00

(54) **KOMPONENTE AUS EINEM FASERVERSTÄRKTEN KUNSTSTOFF MIT REDUZIERTER AUFZIEHSPANNUNG UND VERFAHREN ZU DEREN HERSTELLUNG**
COMPONENT MADE OF A FIBRE-REINFORCED PLASTIC WITH REDUCED PULL-APART STRESS, AND METHOD FOR PRODUCING THE SAME
COMPOSANT CONSTITUÉ D'UNE MATIÈRE PLASTIQUE RENFORCÉE PAR DES FIBRES À CONTRAINTE D'ARRACHEMENT RÉDUITE ET SA MÉTHODE DE PRODUCTION

(30) Priorität: 28.10.2019 DE 102019128997
(43) Veröffentlichungstag der Anmeldung: 07.09.2022
(73) Patentinhaber: Airbus Operations GmbH, 21129 Hamburg (DE)
(72) Erfinder: SCHUBERT, Konstantin, 21129 Hamburg (DE); BORN, Johannes, 21129 Hamburg (DE); ELBRACHT, Dirk, 21129 Hamburg (DE)
(86) Internationale Anmeldenummer: PCT/EP2020/080012
(87) Internationale Veröffentlichungsnummer: WO 2021/083829

(56) Entgegenhaltungen:
- EP-A1- 2 014 437
- EP-A1- 2 639 047

## Beschreibung

### TECHNISCHES GEBIET

Die Erfindung betrifft eine Komponente aus einem faserverstärkten Kunststoff, ein Fahrzeug mit einer solchen Komponente sowie ein Verfahren zum Herstellen einer derartigen Komponente.

### HINTERGRUND DER ERFINDUNG

Komponenten aus einem faserverstärkten Kunststoff werden für eine Vielzahl von unterschiedlichen Anwendungszwecken konzipiert. Bei der Auslegung der Komponenten werden Ausrichtungen und Verläufe von Fasern, Anzahlen der Lagen von Fasern und Übergänge zwischen flächigen Abschnitten an die zu erwartenden Belastungen angepasst. Neben großformatigen Bauteilen sind auch kleinformatige Bauteile weit verbreitet, die geometrisch relativ einfach gestaltet sind. Beispielsweise ist bekannt, bei der Konzeption von Flugzeugrümpfen aus faserverstärktem Kunststoff eine Vielzahl von Winkelbauteilen (sogenannte "Brackets") einzusetzen, die innenseitig an dem Rumpf befestigt sind und verschiedene andere Komponenten tragen, etwa rumpfumfangsseitig angeordnete Spanten.

Derartige Bauteile sind üblicherweise mit mindestens zwei winklig zueinander angeordneten Flächenabschnitten versehen, die über einen gebogenen Übergangsabschnitt miteinander verbunden sind. Die Flächenabschnitte können etwa weitgehend senkrecht zueinander stehen. Aufgrund der üblicherweise nicht isotropen Materialeigenschaften ist in dem Übergangsabschnitt eine starke Kopplung von Biegespannungen und Spannungen in Dickenrichtung zu erkennen. Interlaminare Aufziehspannungen können bei der Belastung der Komponente entstehen, da das Bauteil in dem Übergangsabschnitt bei äußerer Last gedehnt wird und zusätzlich entgegen dessen Krümmungsrichtung gebogen wird. Durch radiale Komponenten der Aufziehspannungen können sich einzelne Lagen innerhalb des Schichtaufbaus in dem Übergangsabschnitt voneinander lösen. Um diese zu verhindern ist bekannt, den Übergangsbereich etwas komplexer auszuformen.

DE 10 2011 017 460 A1 offenbart hierfür etwa einen Übergangsabschnitt zwischen zwei winklig zueinander angeordneten Flächenabschnitten, wobei der Übergangsabschnitt mindestens einen ersten Krümmungsabschnitt und mindestens einen zweiten Krümmungsabschnitt aufweist, deren mittlere Krümmungen sich voneinander unterscheiden und die sich tangentenstetig aneinander anschließen. Der erste Flächenabschnitt schließt an den Übergangsabschnitt und der Übergangsabschnitt schließt an den zweiten Flächenabschnitt jeweils tangentenstetig an. Dabei ist der Krümmungsradius des ersten Krümmungsabschnitts geringer als der des zweiten Krümmungsabschnitts.

Die Schrift EP 2014437 A1 der Gesellschaft Mitsubishi Heavy Industries offenbart ein Verfahren zum Formen eines Strukturelements aus Verbundwerkstoff, das hauptsächlich in Strukturelementen, wie z. B. Kanal- oder Winkelmaterialien, verwendet wird, sowie ein Strukturelement aus Verbundwerkstoff. Ein Ziel der Erfindung ist es, ein Verfahren zum Formen eines Strukturelements aus Verbundwerkstoff bereitzustellen, das in der Lage ist, Faserfalten selbst bei sehr langen Formen mit nicht entwicklungsfähigen Oberflächen zu unterdrücken, und auch ein Strukturelement aus Verbundwerkstoff bereitzustellen. Wenn ein Prepreg-Laminat gegen ein Formwerkzeug gepresst wird, umfasst das Verfahren einen Vorbereitungsschritt, bei dem ein Prepreg-Laminat zum Formen vorbereitet wird, indem eine Vielzahl von Prepregs mit unterschiedlichen Faserorientierungen in eine flache Plattenform laminiert werden, und einen Druckanwendungsschritt, bei dem das im Vorbereitungsschritt vorbereitete Prepreg-Laminat zum Formen gegen das Formwerkzeug gepresst wird, und in dem Vorbereitungsschritt ein spezifiziertes Prepreg mit einer Faserorientierung, die mit der Richtung des Auftretens von Falten übereinstimmt oder nahe daran ist, entweder innerhalb des Bereichs des Auftretens von Falten oder in der Nähe davon entlang einer Richtung gespalten wird, die wirksam ist, um das Auftreten von Falten zu verhindern, und das gespaltene Prepreg dann bei der Vorbereitung des Prepreg-Laminats verwendet wird.

### ZUSAMMENFASSUNG DER ERFINDUNG

Es ist eine Aufgabe der Erfindung, eine Komponente aus einem faserverstärkten Kunststoff herzustellen, bei denen Aufziehspannungen in einem Übergangsabschnitt zwischen zwei Flächenabschnitten reduziert oder vermieden werden, wobei gleichzeitig die Komponente einfach zu fertigen ist.

Die Aufgabe wird gelöst durch eine Komponente mit den Merkmalen des unabhängigen Anspruchs sowie ein Verfahren mit den Merkmalen des unabhängigen Anspruchs 8. Vorteilhafte Ausführungsformen und Weiterbildungen sind den Unteransprüchen und der nachfolgenden Beschreibung zu entnehmen.

Es wird eine Komponente aus einem faserverstärkten Kunststoff vorgeschlagen, aufweisend einen ersten Flächenabschnitt, einen zweiten Flächenabschnitt, und einen von dem ersten Flächenabschnitt und dem zweiten Flächenabschnitt eingeschlossenen Übergangsabschnitt, wobei Oberflächentangenten des ersten Flächenabschnitts und des zweiten Flächenabschnitts zumindest in an den Übergangsabschnitt angrenzenden Bereichen nicht parallel sind, wobei der Übergangsabschnitt eine Krümmung aufweist, die sich tangentenstetig an die angrenzenden Flächenabschnitte anschließt, wobei sich eine Anordnung mindestens zweier Lagen aus einem faserverstärkten Kunststoff von dem ersten Flächenabschnitt über den Übergangsabschnitt auf den zweiten Flächenabschnitt erstreckt, und wobei Fasern mindestens einer der Lagen auf dem ersten Flächenabschnitt und dem zweiten Flächenabschnitt mit einer gleichbleibenden Ausrichtung verlaufen und auf dem Übergangsabschnitt einen entlang der Laufrichtung seitlich versetzten, geknickten oder gekrümmten Verlauf aufweisen.

Der erste Flächenabschnitt und der zweite Flächenabschnitt können zusammen mit dem Übergangsabschnitt ein zumindest bereichsweise L-förmiges Bauteil bilden. Die Abschnitte weisen dabei mindestens zwei Lagen aus dem faserverstärkten Kunststoff auf. Die Lagen erstrecken sich bevorzugt vollständig über beide Flächenabschnitte sowie den Übergangsabschnitt und bilden bevorzugt durchgehende Bahnen des betreffenden Materials. Das Material weist Verstärkungsfasern auf, die in eine Matrix aus einem Kunststoff eingebunden sind. Der Kunststoff könnte ein Harz und insbesondere ein wärmehärtbares Harz aufweisen. Alternativ dazu könnte auch ein thermoplastischer Kunststoff eingesetzt werden.

Um die Bauteilfestigkeit generell zu optimieren, sind der erste Flächenabschnitt, der zweite Flächenabschnitt und der Übergangsabschnitt bevorzugt tangentenstetig zueinander ausgebildet. Es folgen demnach bevorzugt keine Sprünge in der Krümmung der Komponente, sodass keine Spannungssprünge entstehen. Die Ausrichtung der Verstärkungsfasern in den beiden Flächenabschnitten kann identisch zueinander sein. Lediglich in dem Übergangsabschnitt ist eine abweichende Ausrichtung der Fasern vorgesehen.

Wie vorangehend angedeutet, unterscheiden sich ebene und gekrümmte Bauteile dadurch voneinander, dass eine Biegebelastung zu einer Beanspruchung in Dickenrichtung in Form von Aufziehspannungen σᵣ führen kann. Bei einer identischen äußeren Last auf die Komponente etwa ein kleinerer Krümmungsradius zu einer größeren Beanspruchung in Dickenrichtung führen, als ein größerer Radius. Eine Delamination wird hauptsächlich durch die Krümmung als Kehrwert des Krümmungsradius getrieben. Eine stärkere Krümmung könnte dabei für stärkere Aufziehspannungen verantwortlich sein als eine schwächere Krümmung. Es kann günstig sein, den Krümmungsradius des Bauteils konstant zu halten, beispielsweise zur Vereinfachung der Fertigung oder aus Gründen der einfacheren Installation des Bauteils. Bei der Konstruktion von Bauteilen aus einem Faserverbundmaterial mit einem ersten Flächenabschnitt und einem winklig dazu angeordneten zweiten Flächenabschnitt kann ein Krümmungsradius nicht beliebig vergrößert werden, da das Faserverbundbauteil üblicherweise nur einen eingeschränkten Bauraum zur Verfügung hat. Solche Restriktionen können in Form von konkreten Positionen von Verbindungsmitteln wie Nieten, Bolzen oder dergleichen in den Flächenabschnitten sein, allerdings auch durch die Erstreckung benachbart positionierter Faserverbundbauteile oder anderer Körper vorgegeben werden.

Erfindungsgemäß kann allerdings der geänderte Faserverlauf zu einer reduzierten Aufziehspannung führen. Durch den geänderten Faserverlauf verbessert sich die effektive Festigkeit gegen eine Delamination, da sich das Verhältnis zwischen Biegung und Festigkeit in Dickenrichtung verbessert. Durch die lokale Änderung der Faserausrichtung wird die effektive Anordnung der aufeinander liegenden Lagen innerhalb des Übergangsabschnitts beeinflusst, die sich dann von dem der übrigen Abschnitte der Komponente unterscheidet. Dazu werden während des Auflegens der Lagen der Komponente oder des Auflegens des Vorformlings, der später in die gewünschte Bauteilgeometrie geformt wird, lokale Ausrichtungen innerhalb des Übergangsabschnitts verändert. Der Faserverlauf ist bevorzugt stetig und weist keine scharfen Kanten oder Übergänge auf.

Dies kann mit jedem Prozess erfolgen, der eine lokale Faserausrichtungsänderung ermöglicht, wie z.B. ein "Tailored fiber placement (TFP)"-Verfahren für Trockenfasern, ein "Fiber patch placement"-Verfahren, ein "Automated fiber placement (AFP)"-Verfahren, ein 3D-Druckverfahren mit Faserverstärkung oder weitere, geeignete Verfahren. Die Faserausrichtung wird erfindungsgemäß innerhalb des Übergangsabschnitts in den an den Übergangsabschnitt angrenzenden Bereichen unverändert bleiben würde, während die Fasern entlang ihrer Längsrichtung seitlich versetzt werden. Durch den seitlichen Versatz kann eine Winkeländerung lokaler Tangenten entlang der Laufrichtung der betreffenden Fasern über den Übergangsabschnitt beispielsweise kontinuierlich zunehmen und anschließend kontinuierlich wieder abnehmen.

Durch die erfindungsgemäße Gestaltung mit lokal optimierten Faserausrichtungen, die ohne Einführung von Spleißungen/Schichtschnitten erstellt wurden, sowie mit unveränderten Eigenschaften in den an den Übergangsabschnitt angrenzenden Flächenabschnitten, wird eine effektive Verbesserung des Aufziehspannungsverhaltens erreicht. Die lokale Modifikation kann in einem netzförmigen Ablege-Prozess, etwa beim Ablegen auf das Werkzeug während eines AFP-Prozesses oder beim direkten 3D-Druck in die Form, ebenso erstellt werden wie während eines Vorformprozesses, etwa durch das TFP-Verfahren oder durch Drucken des gewünschten Halbzeugs und anschließendes Umformen. Dies ermöglicht die Anpassung der lokalen Eigenschaften, insbesondere das Erhöhen der lokalen Biegesteifigkeit und das Verringern der lokalen Axialsteifigkeit ohne das Schneiden der Fasern und ermöglicht dadurch Verbesserungen bei der Aufziehspannung, ohne geometrische Beschränkungen zu verletzen und/oder Änderungen der effektiven Eigenschaften der Flächenabschnitte zu bewirken.

In einer bevorzugten Ausführungsform weist der versetzte oder gekrümmte Verlauf eine Winkeländerung lokaler Tangenten entlang der Laufrichtung der betreffenden Fasern auf. Die Winkeländerung kann dabei bevorzugt anhand einer ebenen Abwicklung der Komponente in dem Bereich des Übergangsabschnitts und zumindest der angrenzenden Bereiche des ersten und des zweiten Flächenabschnitts erläutert werden. Statt einer Abwicklung könnte auch eine Projektion auf eine Ebene gebildet werden, die die beiden Flächenabschnitte schneidet und symmetrisch zu dem Übergangsabschnitt liegt. Bei herkömmlichen Komponenten dieser Bauart mit nicht angepasstem Faserverlauf würden die einzelnen Fasern auf der Abwicklung oder der Ebenenprojektion geradlinig über den angrenzenden Bereich des ersten Flächenabschnitts, den Übergangsabschnitt und den angrenzenden Bereich des zweiten Flächenabschnitts verlaufen. Die Fasern bilden üblicherweise also Geraden in dem betrachteten Bereich aus. Die Tangenten der betreffenden Fasern auf dem Übergangsabschnitt sind (in der Abwicklung oder Ebenenprojektion) folglich über dem gesamten Übergangsabschnitt parallel zueinander und zu den jeweiligen Tangenten auf dem ersten und zweiten Flächenabschnitt. Erfindungsgemäß weichen die Tangenten in der Abwicklung oder der Ebenenprojektion von den Verläufen auf dem ersten und dem zweiten Flächenabschnitt ab. Dabei können die lokalen Tangenten der Faserverläufe insbesondere in einem Anschlussbereich zwischen dem Übergangsabschnitt und jeweils einem Flächenabschnitt tangentenstetig sein. Dies ist jedoch nicht unbedingt notwendig. Die Winkel könnten sich in einem Anschlussbereich auch sprunghaft ändern.

In einer bevorzugten Ausführungsform nimmt die Winkeländerung über dem Übergangsabschnitt kontinuierlich zu und anschließend kontinuierlich wieder ab. Mit zunehmender Entfernung von einer Grenze zwischen dem Übergangsabschnitt und jeweils einem Flächenabschnitt wird der lokale seitliche Versatz bzw. die lokale Winkeländerung größer. Durch die kontinuierliche Zu- und Abnahme wird ein tangentenstetiger Verlauf auf dem Übergangsabschnitt bereitgestellt, der in der Abwicklung bzw. der Ebenenprojektion einen gekrümmten Verlauf besitzt.

Bevorzugt verlaufen die Winkeländerungen über dem Übergangsabschnitt symmetrisch. Durch den symmetrischen Verlauf kann auch der Verlauf der Aufziehspannung besonders harmonisch beeinflusst werden, was wiederum auch die Neigung Delamination deutlich verringert.

Es ist vorteilhaft, wenn die Winkeländerungen in einem Bereich von -30° bis 30° und bevorzugt in einem Bereich von -15° bis 15° liegen. Größere Winkeländerungen könnten größere Übergangsabschnitte erfordern. Winkeländerungen von bis zu 30° sind bereits sehr deutlich und können effektiv die lokalen Aufziehspannungen deutlich verringern. Bei der Auslegung eine erfindungsgemäßen Komponente ist zwischen möglichem Winkeländerungsverlauf und generell möglichen Abmessungen Übergangsabschnitts abzuwägen.

Es ist weiterhin vorteilhaft, wenn der Verlauf der betreffenden Fasern auf dem Übergangsabschnitt tangentenstetig an den Verlauf auf den Flächenabschnitten anschließt. Sprunghafte Änderungen einer Festigkeit bzw. eines Spannungsverlauf können damit verhindert werden.

Des Weiteren kann es besonders vorteilhaft sein, dass Fasern mindestens einer der Lagen auf dem ersten Flächenabschnitt und dem zweiten Flächenabschnitt mit unterschiedlichen Ausrichtungen verlaufen. Neben der besonderen Gestaltung des Übergangsabschnitts kann durch Wahl unterschiedlicher Verlaufswinkel auf beiden Flächenabschnitten das Verhalten der Komponente hinsichtlich der Aufziehspannung noch weiter verbessert werden. Dieses Verhalten kann durch eine Kombination der Wahl der Winkeländerung auf dem Übergangsabschnitt sowie des Winkelunterschieds auf beiden Flächenabschnitten optimiert werden.

Der faserverstärkte Kunststoff kann ein thermoplastisches Matrixmaterial aufweisen. Thermoplastische Materialien weisen den Vorteil auf, dass sie sich bereichsweise gut aufschmelzen oder zumindest erweichen lassen, beispielsweise um aufgelegte und ausgerichtete Fasern zu heften oder einzuschließen. Das thermoplastische Matrixmaterial könnte etwa Polyamid, Polyetherimid, PEKK, PEEK, PAEK, PPS oder weitere geeignete Materialien aufweisen.

Die Erfindung betrifft ferner ein Verfahren zum Herstellen einer Komponente für ein Fahrzeug, aufweisend die Schritte des Bereitstellens eines Formwerkzeugs, auf dem eine erste Ablagefläche, eine zweite Ablagefläche und eine davon eingeschlossene, gekrümmte Übergangsfläche angeordnet sind, wobei Oberflächentangenten der ersten Ablagefläche und der zweiten Ablagefläche zumindest in an die Übergangsfläche angrenzenden Bereichen nicht parallel sind, des Ablegens mehrerer Fasern aufweisenden Lagen eines Kunststoffs auf das Formwerkzeug, so dass sich die Lage von der ersten Ablagefläche über die Übergangsfläche auf die zweite Ablagefläche zum Ausbilden eines ersten Flächenabschnitts, eines zweiten Flächenabschnitts und eines Übergangsabschnitts erstreckt, wobei die Fasern mindestens einer der Lagen auf dem ersten Flächenabschnitt und dem zweiten Flächenabschnitt mit einer gleichbleibenden Ausrichtung verlaufen und auf dem Übergangsabschnitt einen entlang der Laufrichtung seitlich versetzten oder gekrümmten Verlauf aufweisen, Aushärten der Komponente und Entnehmen der Komponente von dem Formwerkzeug.

Das Ablegen kann dabei auf Basis eines Prozesses einer Gruppe von Prozessen erfolgen, wobei die Gruppe ein "Tailored fiber placement (TFP)"-Verfahren mit Trockenfasern, ein "Fiber patch placement"-Verfahren, ein "Automated fiber placement"-Verfahren, und ein 3D-Druckverfahren mit Faserverstärkung aufweist.

Bevorzugt liegen die Winkeländerungen in einem Bereich von -30° bis 30° und bevorzugt in einem Bereich von -15° bis 15°.

Weiterhin ist es besonders vorteilhaft, wenn die Lagen in eine thermoplastische Matrix eingeschlossen werden.

Die Erfindung betrifft ferner ein Fahrzeug, aufweisend mindestens eine Komponente gemäß der vorangehenden Beschreibung.

Das Fahrzeug könnte ein Flugzeug sein und einen Flugzeugrumpf aus einem faserverstärkten Kunststoff aufweisen.

In einer vorteilhaften Ausführungsform ist die mindestens eine Komponente ein Verbindungsbauteil, das auf einer Innenseite des Flugzeugrumpfs angeordnet ist und mit einem innerhalb des Flugzeugrumpfs angeordneten Bauteil verbunden ist. Schließlich kann der Flugzeugrumpf ein thermoplastisches Matrixmaterial mit darin eingebetteten Fasern aufweisen.

### KURZE BESCHREIBUNG DER FIGUREN

Weitere Merkmale, Vorteile und Anwendungsmöglichkeiten der vorliegenden Erfindung ergeben sich aus der nachfolgenden Beschreibung der Ausführungsbeispiele und den Figuren.
Fig. 1 zeigt eine erfindungsgemäße Komponente in einer schematischen, dreidimensionalen Ansicht sowie einer Detaildarstellung einer Abwicklung der Komponente.
Fig. 2 zeigt einen Winkelverlauf von Fasern der Komponente 2.
Fig. 3 zeigt ein Flugzeug, in das eine solche Komponente integriert ist.
Fig. 4 zeigt schematisch ein Verfahren zum Herstellen einer erfindungsgemäßen Komponente auf einem Formwerkzeug.

### DETAILLIERTE DARSTELLUNG EXEMPLARISCHER AUSFÜHRUNGSFORMEN

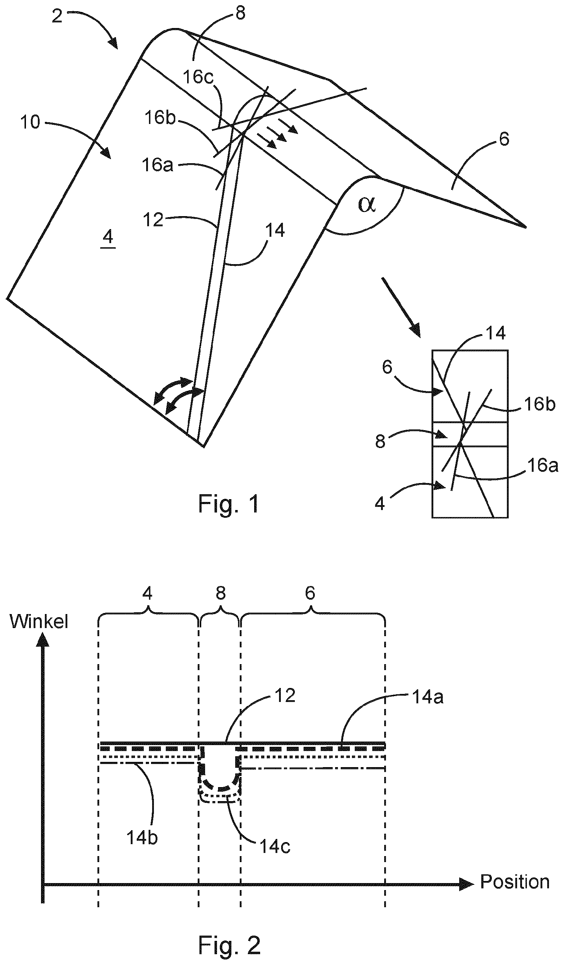

Fig. 1 zeigt eine Komponente 2 aus einem faserverstärkten Kunststoff. Die Komponente 2 weist einen ersten Flächenabschnitt 4, einen zweiten Flächenabschnitt 6 sowie einen von dem ersten Flächenabschnitt 4 und dem zweiten Flächenabschnitt 6 eingeschlossenen Übergangsabschnitt 8 auf. Die Komponente 2 ist lediglich sehr schematisch dargestellt und die beiden Flächenabschnitte 4 und 6 sind eben bzw. planar ausgeführt. Sie schließen einen Winkel α von ungefähr 90° zueinander ein. Der Übergangsabschnitt 8 ist beispielhaft kontinuierlich gekrümmt und schließt ebenso beispielhaft tangentenstetig an die beiden Flächenabschnitte 4 und 6 an. Hierdurch wird ein harmonischer Übergang über den Winkel α hergestellt. Der Krümmungsradius des Übergangsabschnitts 8 kann je nach vorhandenem oder angemessenem Bauraum dimensioniert werden.

Die Komponente 2 kann mehrere Lagen 10 aus einem faserverstärkten Kunststoff aufweisen. Die Lagen 10 liegen aufeinander und sind bevorzugt stoffschlüssig verbunden und gemeinsam ausgehärtet. Dadurch ergibt sich ein hochfestes Faserverbundbauteil. Belastungen, die auf die Flächenabschnitte 4 bzw. 6 einwirken, führen zwangsläufig auch zu Spannungen in dem Übergangsabschnitt 8.

Wie vorangehend erläutert, können die auf die Komponente 2 einwirkenden Lasten in dem Übergangsabschnitt 8 zu Aufziehspannungen führen, durch die sich dort im Extremfall lokal Lagen 10 voneinander lösen könnten. Eine solche Delamination ist zu verhindern, um die Funktion der Komponente 2 gewährleisten zu können.

In herkömmlichen Bauteilen werden Fasern 12 eingesetzt, welche in ihrer zugehörigen Faserlage eine gleichbleibende, über alle Abschnitte 4, 6 und 8 konstante Ausrichtung aufweisen. Lediglich durch Vergrößerung des Krümmungsradius können Aufziehspannungen verringert werden. Weiterhin kann auch durch eine entsprechende Wahl der Dicke der Komponente 2 eine Delamination verhindert werden. Die Vergrößerung der Dicke oder des Krümmungsradius ist jedoch nicht unbegrenzt möglich und würde das Gewicht und den Bauraumbedarf der Komponente 2 erhöhen.

Erfindungsgemäß sind Fasern 14 vorgesehen, die lediglich an den Flächenabschnitten 4 und 6 dieselbe Ausrichtung aufweisen. In dem Übergangsabschnitt 8 sind die Ausrichtungen der Fasern 14 jedoch seitlich versetzt, wie durch die Pfeile im Übergangsabschnitt 8 angedeutet. Lokale Tangenten 16a, 16b, 16c, etc. schließen folglich in dem Übergangsabschnitt 8 einen in der Abwicklung der Komponente 2 seitlich, d.h. parallel zu der Krümmungsachse gemessenen, Winkel zu dem jeweiligen Verlauf auf dem ersten Flächenabschnitt 4 bzw. dem zweiten Flächenabschnitt 6 auf. Dies wird in einem kleinen Detail in der Zeichnungsebene rechts unten noch einmal mittels einer Draufsicht auf die Abwicklung dargestellt.

In Fig. 2 wird die seitliche Winkeländerung noch einmal anhand eines Diagramms dargestellt. Die Y-Achse steht dabei für einen lokalen Ausrichtungswinkel einer Faser 14 anhand dreier Beispiele mit Bezugszeichen 14a, 14b und 14c in einem an der Oberfläche der Komponente festgelegten Koordinatensystem. Die X-Achse steht dabei für die Position entlang der Oberfläche der Komponente 2. Durch einen linken Bereich wird der erste Flächenabschnitt 4 repräsentiert. Durch einen rechten Bereich wird der zweite Flächenabschnitt 6 repräsentiert. Hiervon eingeschlossen ist der Übergangsabschnitt 8. Während eine übliche Faser 12, die hier mit einer durchgezogenen Linie angezeigt wird, einen gleichbleibenden Winkel aufweist, ist eine Winkelabweichung in einer Faser 14a der erfindungsgemäßen Komponente 2 deutlich ersichtlich. Die Winkeländerung nimmt mit zunehmendem Verlauf über dem Übergangsabschnitt 8 beispielhaft kontinuierlich zu, bis sie dann wieder kontinuierlich abfällt und in beiden Flächenabschnitten 4 und 6 dieselbe Ausrichtung wie bei der herkömmlichen Faserausrichtung der Faser 12 aufweist. Ein strichpunktiert dargestellter Verlauf einer zusätzlichen oder alternativen Faser 14b kann weiterhin auf den Flächenabschnitten 4 und 6 unterschiedliche Winkel aufweisen. Durch den Wechsel der Faserausrichtung kann eine weitere Verbesserung des Aufziehspannungsverhaltens erreicht werden. Die Winkeländerung kann dabei harmonisch wie bei Faser 14a verlaufen, allerdings auch in Form einer abrupteren Winkeländerung. Dann würde der Winkel α in dem Übergangsabschnitt 8 weitgehend ein Plateau ausbilden, wie mit dem Verlauf der Faser 14b gezeigt. Die gepunktete Verlaufslinie einer Faser 14c könnte wie bei Faser 14a verlaufen, jedoch mit einem Plateau wie bei Faser 14b.

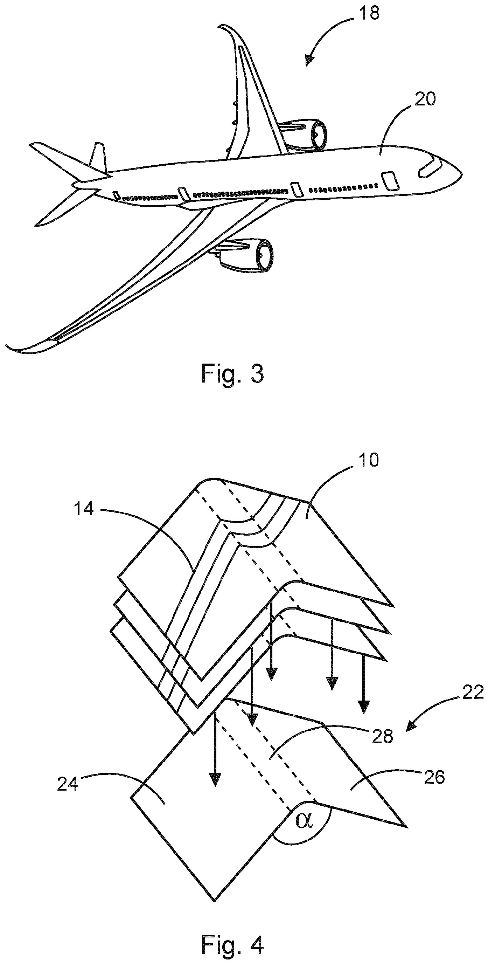

Fig. 3 zeigt ein Flugzeug 18, das einen Flugzeugrumpf 20 aufweist. Im Innern des Flugzeugrumpfs 20 können beispielsweise mehrere Komponenten 2 angeordnet und mit der Innenseite des Flugzeugrumpfs 20 verbunden sein.

Fig. 4 zeigt ein Formwerkzeug 22, auf dem eine erste Ablagefläche 24, eine zweite Ablagefläche 26 und eine davon eingeschlossene, beispielhaft kontinuierlich gekrümmte Übergangsfläche 28 angeordnet sind. Wie bei dem Bauteil in Fig. 1 gezeigt, sind Oberflächentangenten der ersten Ablagefläche 24 und der zweiten Ablagefläche 26 zumindest in den gezeigten Bereichen angrenzend an die Übergangsfläche 28 nicht parallel. Sie schließen auch hier den Winkel α zueinander ein.

Es werden mehrere Lagen 10 aus einem faserverstärkten Kunststoff auf das Formwerkzeug 22 abgelegt. Die Lagen 10 erstrecken sich dann von der ersten Ablagefläche 24 über die Übergangsfläche 28 auf die zweite Ablagefläche 26. Damit werden der erste Flächenabschnitt 4, der zweite Flächenabschnitt 6 und der davon eingeschlossene Übergangsabschnitt 8 gebildet. Die Fasern 14 werden dabei wie anhand von Fig. 1 erläutert ausgerichtet. Anschließend werden die Lagen 10 gemeinsam ausgehärtet und die daraus entstandene Komponente 2 dem Formwerkzeug 22 wieder entnommen. Das Aushärten kann sich sowohl auf das Zuführen von Wärme zum Aushärten eines wärmehärtbaren Harzes äußern, als auch das Abkühlen eines thermoplastischen Matrixmaterials.

Ergänzend sei darauf hingewiesen, dass "aufweisend" keine anderen Elemente oder Schritte ausschließt, und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

### BEZUGSZEICHEN

- 2: Komponente
- 4: erster Flächenabschnitt
- 6: zweiter Flächenabschnitt
- 8: Übergangsabschnitt
- 10: Lage
- 12: herkömmliche Faser
- 14: Faser
- 16: Tangente (16a, 16b, 16c, ...)
- 18: Flugzeug
- 20: Flugzeugrumpf
- 22: Formwerkzeug
- 24: erste Ablagefläche
- 26: zweite Ablagefläche
- 28: Übergangsfläche

- α: Winkel zwischen Flächenabschnitten bzw. Ablageflächen

## Patentansprüche

1. Komponente (2) aus einem faserverstärkten Kunststoff, aufweisend:
- einen ersten Flächenabschnitt (4),
- einen zweiten Flächenabschnitt (6),
- einen von dem ersten Flächenabschnitt (4) und dem zweiten Flächenabschnitt (6) eingeschlossenen Übergangsabschnitt (8),
wobei Oberflächentangenten (16) des ersten Flächenabschnitts (4) und des zweiten Flächenabschnitts (6) zumindest in an den Übergangsabschnitt (8) angrenzenden Bereichen nicht parallel sind,
wobei der Übergangsabschnitt (8) eine Krümmung aufweist, die sich tangentenstetig an die angrenzenden Flächenabschnitte (4, 6) anschließt,
wobei sich eine Anordnung mindestens zweier Lagen (10) aus einem faserverstärkten Kunststoff von dem ersten Flächenabschnitt (4) über den Übergangsabschnitt (8) auf den zweiten Flächenabschnitt (6) erstreckt, und
wobei Fasern (14) mindestens einer der Lagen (10) auf dem ersten Flächenabschnitt (4) und dem zweiten Flächenabschnitt (6) mit einer gleichbleibenden Ausrichtung verlaufen und **dadurch gekennzeichnet, dass** die Fasern (14) auf dem Übergangsabschnitt (8) einen entlang der Laufrichtung seitlich versetzten, geknickten oder gekrümmten Verlauf aufweisen.

2. Komponente (2) nach Anspruch 1,
wobei der versetzte oder gekrümmte Verlauf eine Winkeländerung lokaler Tangenten (16) entlang der Laufrichtung der betreffenden Fasern (14) aufweist.

3. Komponente (2) nach Anspruch 2,
wobei die Winkeländerung über den Übergangsabschnitt (8) zunimmt und anschließend wieder abnimmt.

4. Komponente (2) nach Anspruch 2 oder 3,
wobei die Winkeländerungen über dem Übergangsabschnitt (8) symmetrisch verlaufen.

5. Komponente (2) nach einem der vorhergehenden Ansprüche,
wobei die Winkeländerungen in einem Bereich von -30° bis 30° und bevorzugt in einem Bereich von -15° bis 15° liegen.

6. Komponente (2) nach einem der vorhergehenden Ansprüche,
wobei der Verlauf der betreffenden Fasern (14) auf dem Übergangsabschnitt (8) tangentenstetig an den Verlauf auf den Flächenabschnitten (4, 6) anschließt.

7. Komponente (2) nach einem der vorhergehenden Ansprüche,
wobei der faserverstärkte Kunststoff ein thermoplastisches Matrixmaterial aufweist.

8. Verfahren zum Herstellen einer Komponente (2) für ein Fahrzeug (18), aufweisend die Schritte:
- Bereitstellen eines Formwerkzeugs (22), auf dem eine erste Ablagefläche (24), eine zweite Ablagefläche (26) und eine davon eingeschlossene, gekrümmte Übergangsfläche (28) angeordnet sind, wobei Oberflächentangenten der ersten Ablagefläche (24) und der zweiten Ablagefläche (26) zumindest in an die Übergangsfläche (28) angrenzenden Bereichen nicht parallel sind,
- Ablegen mehrerer Fasern (14) aufweisenden Lagen (10) eines Kunststoffs auf das Formwerkzeug (22), so dass sich die Lagen (10) von der ersten Ablagefläche (24) über die Übergangsfläche (28) auf die zweite Ablagefläche (26) zum Ausbilden eines ersten Flächenabschnitts (4), eines zweiten Flächenabschnitts (6) und eines Übergangsabschnitts (8) erstrecken, wobei die Fasern (14) mindestens einer der Lagen (10) auf dem ersten Flächenabschnitt (4) und dem zweiten Flächenabschnitt (6) mit einer gleichbleibenden Ausrichtung verlaufen,
- Aushärten der Komponente (2) und
- Entnehmen der Komponente (2) von dem Formwerkzeug (22), **dadurch gekennzeichnet, dass** die Fasern auf dem Übergangsabschnitt (8) einen entlang der Laufrichtung seitlich versetzten, geknickten oder gekrümmten Verlauf aufweisen.

9. Verfahren nach Anspruch 8,
wobei das Ablegen auf Basis eines Prozesses einer Gruppe von Prozessen erfolgt, die Gruppe aufweisend:
- Tailored fiber placement mit Trockenfasern,
- Fiber patch placement,
- Automated fiber placement, und
- ein 3D-Druckverfahren mit Faserverstärkung.

10. Verfahren nach Anspruch 8 oder 9,
wobei die Winkeländerungen in einem Bereich von -30° bis 30° und bevorzugt in einem Bereich von -15° bis 15° liegen.

11. Verfahren nach einem der Ansprüche 8 bis 10,
wobei die Lagen (10) in eine thermoplastische Matrix eingeschlossen werden.

12. Fahrzeug (18), aufweisend mindestens eine Komponente (2) nach einem der Ansprüche 1 bis 7.

13. Fahrzeug (18) nach Anspruch 12, wobei das Fahrzeug (18) ein Flugzeug (18) ist und einen Flugzeugrumpf (20) aus einem faserverstärkten Kunststoff aufweist.

14. Fahrzeug (18) nach Anspruch 13, wobei die mindestens eine Komponente (2) ein Verbindungsbauteil ist, das auf einer Innenseite des Flugzeugrumpfs (20) angeordnet ist und mit einem innerhalb des Flugzeugrumpfs (20) angeordneten Bauteil verbunden ist.

15. Fahrzeug nach einem der Ansprüche 12 bis 14,
wobei der Flugzeugrumpf (20) ein thermoplastisches Matrixmaterial mit darin eingebetteten Fasern aufweist.

## Claims

1. Component (2) made of a fiber-reinforced plastic, comprising:
- a first surface portion (4),
- a second surface portion (6),
- a transition portion (8) enclosed by the first surface portion (4) and the second surface portion (6),
wherein surface tangents (16) of the first surface portion (4) and of the second surface portion (6) are not parallel at least in regions bordering the transition portion (8),
wherein the transition portion (8) has a curvature which adjoins the bordering surface portions (4, 6) with tangential continuity,
wherein an arrangement of at least two plies (10) of a fiber reinforced plastic extends from the first surface portion (4) via the transition portion (8) to the second surface portion (6), and
wherein fibers (14) of at least one of the plies (10) run with a consistent orientation on the first surface portion (4) and the second surface portion (6) and, **characterized in that** the fibers (14) exhibit a course which is curved, kinked or offset laterally along a running direction on the transition portion (8).

2. Component (2) according to claim 1, wherein the offset or curved course comprises a change in angle of local tangents along the running direction of the fibers (14).

3. Component (2) according to claim 2, wherein the change in angle increases over the transition portion (8) and decreases again subsequently.

4. Component (2) according to claim 2 or 3, wherein the changes in angle run symmetrically over the transition portion (8).

5. Component (2) according to one of the preceding claims, wherein the changes in angle are situated in a range from -30° to 30°, or in a range from -15° to 15°.

6. Component (2) according to one of the preceding claims, wherein the course of the fibers (14) on the transition portion (8) adjoins a course on the surface portions (4, 6) with tangential continuity.

7. Component (2) according to one of the preceding claims, wherein the fiber-reinforced plastic comprises a thermoplastic matrix material.

8. A process for producing a component (2) for a vehicle (18), comprising:
- providing a mold (22) on which there are a first laydown area (24), a second laydown area (26), and, enclosed by the first laydown area (24) and the second laydown area (26), a curved transition area (28), with surface tangents of the first laydown area (24) and of the second laydown area (26) being not parallel at least in regions bordering the transition area (28),
- laying down a plurality of plies (10) of a plastic, comprising fibers (14), onto the mold (22), so that the plies (10) extend from the first laydown area (24) via the transition area (28) to the second laydown area (26) to form a first surface portion (4), a second surface portion (6) and a transition portion (8), with the fibers (14) of at least one of the plies (10) running with a consistent orientation on the first surface portion (4) and the second surface portion (6),
- curing the component (2),
- removing the component (2) from the mold (22), and **characterized in that** the fibers (14) exhibiting a course which is curved, kinked or offset laterally along the running direction on the transition portion (8).

9. The process according to claim 8, wherein the laydown takes place on a basis of an operation of a group of operations, the group comprising:
- tailored fiber placement with dry fibers,
- fiber patch placement,
- automated fiber placement, and
- a 3D printing process with fiber reinforcement.

10. The process according to claim 8 or 9, wherein the changes in angle are situated in a range from -30° to 30°, or in a range from -15° to 15°.

11. The process according to one of claims 8 to 10, wherein the plies (10) are enclosed in a thermoplastic matrix.

12. A vehicle (18), comprising at least one component (2) according to one of claim 1 to 7.

13. The vehicle (18) according to claim 12, wherein the vehicle (18) is an aircraft (18) and comprises a fuselage (20) made of a fiber-reinforced plastic.

14. The vehicle (18) according to claim 13, wherein the at least one component (2) is a connecting component which is disposed on an inside of the fuselage (20) and is connected to a component disposed within the fuselage (20).

15. The vehicle (18) according to one of claims 12 to 14, wherein the fuselage (20) comprises a thermoplastic matrix material with fibers embedded therein.

## Revendications

1. Composant (2) en plastique renforcé de fibres, comprenant:
- une première partie de surface (4),
- une deuxième partie de surface (6),
- une partie de transition (8) entourée par la première partie de surface (4) et la deuxième partie de surface (6),
dans lequel les tangentes de surface (16) de la première partie de surface (4) et de la deuxième partie de surface (6) ne sont pas parallèles au moins dans les régions bordant la partie de transition (8),
dans laquelle la partie de transition (8) présente une courbure qui rejoint les parties de surface (4, 6) avec une continuité tangentielle,
dans lequel un arrangement d'au moins deux plis (10) d'un plastique renforcé de fibres s'étend de la première partie de surface (4) à la deuxième partie de surface (6) en passant par la partie de transition (8), et
dans lequel les fibres (14) d'au moins un des plis (10) s'étendent avec une orientation cohérente sur la première partie de surface (4) et la deuxième partie de surface (6) et, **caractérisé en ce que** les fibres (14) présentent un parcours qui est courbé, plié ou décalé latéralement le long d'une direction d'écoulement sur la partie de transition (8).

2. Composant (2) selon la revendication 1, dans lequel le décalage ou la trajectoire courbe comprend un changement d'angle des tangentes locales le long de la direction de marche des fibres (14).

3. Composant (2) selon la revendication 2, dans lequel le changement d'angle augmente sur la partie de transition (8) et diminue à nouveau par la suite.

4. Composant (2) selon la revendication 2 ou 3, dans lequel les changements d'angle s'étendent symétriquement sur la partie de transition (8).

5. Composant (2) selon l'une des revendications précédentes, dans lequel les variations d'angle sont situées dans une fourchette de -30° à 30°, ou dans une fourchette de -15° à 15°.

6. Composant (2) selon l'une des revendications précédentes, dans lequel le parcours des fibres (14) sur la partie de transition (8) jouxte un parcours sur les parties de surface (4, 6) avec une continuité tangentielle.

7. Composant (2) selon l'une des revendications précédentes, dans lequel le plastique renforcé par des fibres comprend un matériau à matrice thermoplastique.

8. Procédé de fabrication d'un composant (2) pour un véhicule (18), comprenant :
- fournir un moule (22) sur lequel se trouvent une première zone de pose (24), une deuxième zone de pose (26) et, entourée par la première zone de pose (24) et la deuxième zone de pose (26), une zone de transition incurvée (28), les tangentes de surface de la première zone de pose (24) et de la deuxième zone de pose (26) n'étant pas parallèles au moins dans les régions bordant la zone de transition (28),
- déposer plusieurs plis (10) d'une matière plastique, comprenant des fibres (14), sur le moule (22), de sorte que les plis (10) s'étendent de la première zone de dépôt (24) à la seconde zone de dépôt (26) en passant par la zone de transition (28) pour former une première partie de surface (4), une deuxième partie de surface (6) et une partie de transition (8), les fibres (14) d'au moins un des plis (10) s'étendant avec une orientation cohérente sur la première partie de surface (4) et sur la deuxième partie de surface (6),
- durcir le composant (2),
- retirer le composant (2) du moule (22), et **caractérisé par le fait que** les fibres (14) présentent une trajectoire courbée, pliée ou décalée latéralement dans le sens de la marche sur la partie de transition (8).

9. Procédé selon la revendication 8, dans lequel la mise en place s'effectue sur la base d'une opération d'un groupe d'opérations, le groupe comprenant :
- le placement de fibres sur mesure avec des fibres sèches,
- le placement de patchs de fibres,
- le placement automatisé de fibres, et
- un processus d'impression 3D avec renforcement par fibres.

10. Procédé selon la revendication 8 ou 9, dans lequel les changements d'angle se situent dans une fourchette de -30° à 30°, ou dans une fourchette de -15° à 15°.

11. Le procédé selon l'une des revendications 8 à 10, dans lequel les plis (10) sont enfermés dans une matrice thermoplastique.

12. Véhicule (18) comprenant au moins un composant (2) selon l'une des revendications 1 à 7.

13. Véhicule (18) selon la revendication 12, dans lequel le véhicule (18) est un aéronef (18) et comprend un fuselage (20) en plastique renforcé de fibres.

14. Véhicule (18) selon la revendication 13, dans lequel l'au moins un composant (2) est un composant de connexion qui est disposé à l'intérieur du fuselage (20) et est connecté à un composant disposé à l'intérieur du fuselage (20).

15. Le véhicule (18) selon l'une des revendications 12 à 14, dans lequel la cage fusible (20) comprend un matériau à matrice thermoplastique dans lequel sont intégrées des fibres.
